# EUROPÄISCHE PATENTSCHRIFT

(11) **EP 0 879 671 B1**
(45) Veröffentlichungstag und Bekanntmachung des Hinweises auf die Patenterteilung: **30.07.2003**
(21) Anmeldenummer: 98101946.6
(22) Anmeldetag: 05.02.1998
(51) Int. Cl.: B23Q 1/01, B23Q 1/25, B23Q 11/00, B23Q 11/08, B23Q 1/62

(54) **Werkzeugmaschine**
Machine tool
Machine-outil

(30) Priorität: 22.05.1997 DE 19721393
(43) Veröffentlichungstag der Anmeldung: 25.11.1998
(73) Patentinhaber: CHIRON-WERKE GMBH & CO. KG, 78532 Tuttlingen (DE)
(72) Erfinder: Haninger, Rudolf, 78606 Seitingen (DE); Schweizer, Anton, 78573 Wurmlingen (DE)
(74) Vertreter: Otten, Hajo, Dr.-Ing.

(56) Entgegenhaltungen:
- EP-A- 0 803 317
- DE-A- 4 027 107
- DE-A- 4 037 544
- DE-A- 4 223 480
- DE-A- 19 651 662
- PATENT ABSTRACTS OF JAPAN vol. 010, no. 286 (M-521), 27. September 1986 (1986-09-27) & JP 61 103753 A (MAKINO MILLING MACH CO LTD), 22. Mai 1986 (1986-05-22)

## Beschreibung

Die vorliegende Erfindung betrifft eine Werkzeugmaschine mit einem Maschinenfuß, einem auf dem Maschinenfuß angeordneten Werkstücktisch, der eine Aufspannfläche für zu bearbeitende Werkstücke aufweist, einer auf dem Maschinenfuß angeordneten Verschiebemechanik für einen Spindelkopf, der mit einer Werkzeuge zur Bearbeitung der Werkstücke aufnehmenden Spindel versehen und in einem Arbeitsraum oberhalb des Werkstücktisches verfahrbar ist, und einer Verkleidung, die zumindest den Arbeitsraum nach außen abschließt, wobei eine Absaugvorrichtung vorhanden ist, die aus dem Arbeitsraum verschmutzte Luft absaugt.

Eine derartige Werkzeugmaschine ist aus dem Stand der Technik bekannt, beispielsweise aus JP 61-103753 A.

Bei der bekannten Werkzeugmaschine ist der Spindelkopf in drei zueinander orthogonalen Koordinatenrichtungen, nämlich der x-, der y- sowie der z-Richtung in einem Arbeitsraum oberhalb des Werkstücktisches verfahrbar.

Die bekannte Werkzeugmaschine weist weiter eine Verkleidung auf, die zum einen die Werkzeugmaschine nach außen abdeckt und zum anderen für eine Auskleidung des Arbeitsraumes sorgt, um die Verschiebemechanik vor Spänen sowie Bohr- und Kühlöl zu schützen. Die Schlitten und Führungsschienen sind dabei durch Teleskopabdeckungen geschützt, die sozusagen längenveränderliche Abdeckungen bilden, so daß die von der Verschiebemechanik in den Arbeitsraum hineinragenden Teile der Werkzeugmaschine nicht durch Schlitze in der Verkleidung hindurchgehen müssen, durch die Späne und Kühl- sowie Bohrwasser in die Verschiebemechanik gelangen könnten.

Bei manchen Werkzeugmaschinen ist am oberen hinteren Bereich eine Absaugvorrichtung angeordnet, die also sozusagen hinter dem Spindelkopf sitzt. In diesem Bereich sind keine besonderen Abdichtprobleme zu erwarten, so daß die Absaugvorrichtung z.B. mit einem Stutzen in den Innenraum der Werkzeugmaschine hineinragt. Dieser Stutzen kann so weit oben angebracht werden, daß herumfliegende Späne nicht in die Absaugvorrichtung eintreten können.

Bei dieser Anordnung der Absaugvorrichtung ist von Nachteil, daß sie zum einen nur schlecht zugänglich ist, so daß Wartungsmaßnahmen das Heranschaffen von Leitern etc. erfordern, wenn z.B. ein Filter ausgetauscht werden muß.

Diese Absaugvorrichtungen dienen nun nicht nur dazu, die verschmutzte Luft abzusaugen, häufig wird die Luft vorher noch gereinigt, wobei das in Dampfform in der Luft vorhandene Kühlmittel wieder ausgeschieden und über lange Schläuche nach unten in eine Kühlmittelwanne rückgeführt wird. Bei einer Leckage der Schläuche oder der Absaugvorrichtung kommt es immer wieder zu Verschmutzungen durch dann unkontrolliert austretendes, aus der verschmutzten Luft herausgefiltertes bzw. abgeschiedenes Kühlmittel.

Bei der Werkzeugmaschine, die aus der eingangs genannten JP 61-103753 A bekannt ist, erfolgt die Absaugung der verschmutzten Luft durch eine Öffnung in der Seitenwand der Verkleidung. Die Öffnung ist dabei oberhalb des Werkstücktisches und im Bereich des Arbeitsraum angeordnet. Maßnahmen, um die Absaugvorrichtung vor umherfliegenden Spänen zu schützen, sind nicht ersichtlich.

Vor diesem Hintergrund ist es Aufgabe der vorliegenden Erfindung, eine eingangs genannte Werkzeugmaschine derart weiterzubilden, daß bei konstruktiv einfachem Aufbau und Erzielung einer guten Abdichtung des Arbeitsraums insbesondere gegenüber der Verschiebemechanik eine leichte Zugänglichkeit der Absaugvorrichtung möglich ist, wobei ferner gewährleistet sein soll, daß die Absaugvorrichtung nicht durch umherfliegende Späne beschädigt wird.

Diese Aufgabe wird mit einer Werkzeugmaschine der eingangs genannten Art gelöst, bei der die Absaugvorrichtung die verschmutzte Luft durch den Maschinenfuß absaugt, vorzugsweise selbst im Maschinenfuß angeordnet ist, wobei im Bereich des Werkstücktisches eine Innenverkleidung für den Arbeitsraum angeordnet ist, in der eine nach unten weisende erste Öffnung vorgesehen ist, durch die die Absaugvorrichtung die verschmutzte Luft absaugt, wobei die Absaugvorrichtung unterhalb der ersten Öffnung eine zweite Öffnung aufweist, durch die die Absaugvorrichtung in einer Ebene etwa parallel zur Aufspannfläche arbeitet, und wobei unterhalb der zweiten Öffnung eine Spänewanne angeordnet ist.

Die Möglichkeit der Absaugung durch den Maschinenfuß war insofern unerwartet und begegnete wegen sich dort möglicherweise ansammelnden Späne einer Reihe von Vorurteilen. Der Erfinder der vorliegenden Anmeldung hat jedoch erkannt, daß eine Absaugung der verschmutzten Luft durch den Maschinenfuß in der beschriebenen Weise ohne Beeinträchtigung der Funktion der Absaugvorrichtung durch angesaugte Späne möglich ist.

Die Maßnahme ist konstruktiv von Vorteil, es ist zum Beispiel lediglich eine Blechverkleidung im unteren Bereich des Arbeitsraumes vorzusehen, um die Werkzeugmaschine an sich vor Spänen etc. zu schützen. Weil hier keine beweglichen Teile vorhanden sind, genügt eine starre Verkleidung, in der dann eine nach unten führende Öffnung angeordnet werden kann, durch die dann die verschmutzte Luft abgesaugt wird.

Dadurch, daß die Absaugvorrichtung in einer Ebene etwa parallel zur Aufspannfläche arbeitet, ist von Vorteil, daß die Absaugvorrichtung vor eintretenden Spänen geschützt wird. Die verschmutzte Luft wird zwar nach unten in den Maschinenfuß eingesaugt, dann aber nach hinten oder zur Seite durch die Absaugvorrichtung wegbefördert, während die Späne jetzt sozusagen an der Absaugvorrichtung vorbei nach unten in eine dort vorgesehene Spänewanne fallen können. Lediglich die Späne, die sehr dicht an dem Einsaugstutzen der Absaugvorrichtung vorbei fallen, können noch in die Absaugvorrichtung hinein gelangen, wo sie zu Schäden führen könnten. Hier ist jedoch bevorzugt eine Labyrinthdichtung vorgesehen, die diese restlichen Späne "abfängt".

Die der Erfindung zugrunde liegende Aufgabe wird auf diese Weise vollkommen gelöst.

In einer Ausgestaltung der Erfindung ist die Verschiebemechanik oberhalb der Aufspannfläche, vorzugsweise oberhalb des Arbeitsraumes angeordnet.

Die Erfinder der vorliegenden Anmeldung haben nämlich erkannt, daß sich dadurch, daß die Verschiebemechanik hochgelegt wird, eine insgesamt kompakte Anordnung erzielen läßt, bei der der Ständer eine deutlich geringere Höhe aufweisen muß, als dies beim Stand der Technik der Fall war. Mit der geringeren Höhe des Ständers geht auch eine deutlich geringere Masse einher, so daß bei der neuen Werkzeugmaschine größere Beschleunigungen möglich sind.

Ein Vorteil dieser völlig neuen Konstruktion liegt in der Trennung zwischen der Verschiebemechanik einerseits und dem Arbeitsraum andererseits. Die gesamte Verschiebemechanik kann oberhalb und hinter dem Arbeitsraum angebracht werden, so daß die Spindel vor sowie unterhalb des x-Schlittens in den Arbeitsraum von oben eintauchen kann. Diese Konstruktion ermöglicht es jedoch, daß der größte Teil des Arbeitsraumes durch feste Abdeckungen abgedichtet werden kann, so daß im wesentlichen nur noch der obere Bereich des Arbeitsraumes über längenveränderliche Abdeckungen zu schützen ist. Dies bedeutet jedoch, daß auch die Masse der zu bewegenden Abdeckungen deutlich geringer wird, was weiter dazu beiträgt, daß bei der neuen Werkzeugmaschine mit deutlich größeren Beschleunigungen/Geschwindigkeiten beim Verfahren des Spindelkopfes gearbeitet werden kann.

Bei dieser neuen Konstruktion mit hochgelegter Verschiebemechanik sind jetzt im Bereich des Werkstücktisches keine längenveränderlichen Abdeckungen mehr erforderlich, so daß dort jetzt z.B. die Öffnung vorgesehen werden kann, durch die die Absaugvorrichtung die verschmutzte Luft ansaugt, um sie dann zu reinigen und nach außen abzugeben.

Dabei ist es dann bevorzugt, wenn in der Verschiebemechanik drei orthogonal zueinander bewegbare Schlitten vorgesehen sind, von denen der zweite Schlitten verfahrbar an dem ersten und der dritte Schlitten verfahrbar an dem zweiten Schlitten gelagert ist, wobei der Spindelkopf mit dem dritten Schlitten verbunden ist und der erste Schlitten hinter dem Arbeitsraum und oberhalb der Aufspannfläche, vorzugsweise oberhalb des Arbeitsraumes angeordnet ist.

Diese Maßnahme ist konstruktiv von Vorteil, sie ermöglicht eine Anpassung der für sich genommen bekannten Ausbildung der Verschiebemechanik mit drei zueinander orthogonalen Schlittenführungen an die neue Konstruktion mit jetzt hochgelegtem X-Schlitten.

In einer Weiterbildung ist es dann bevorzugt, wenn an dem ersten Schlitten zu beiden Seiten je eine Rolloabdeckung angeordnet ist, die sich beim Verfahren des ersten Schlittens auf- bzw. abwickelt und mit ihrer Rollofläche den Arbeitsraum abdeckt.

Hier ist von Vorteil, daß bei sehr einfacher Konstruktion eine längenveränderliche Abdeckung mit sehr geringem Gewicht eingesetzt wird, wodurch sich die zu bewegende Masse weiter reduziert, was sich vorteilhaft auf das Beschleunigungsverhalten des Spindelkopfes auswirkt. Bei bekannten Werkzeugmaschinen mußten die längenveränderlichen Abdeckungen im Bereich der Aufspannfläche angeordnet werden, also gerade dort, wo die Bearbeitung der Werkstücke erfolgt und somit eine große Anzahl von Spänen anfällt, die zum Teil mit großer Geschwindigkeit und Wucht von dem Werkstück bzw. dem Werkzeug weggeschleudert werden. Um diesen Belastungen Stand zu halten, mußten die bekannten Abdeckungen mechanisch sehr stabil sein.

Bei der neuen Konstruktion, bei der nur noch eine Abdeckung des Arbeitsraumes im wesentlichen nach oben erforderlich ist, sind an die mechanische Festigkeit der längenveränderlichen Abdeckungen deutlich geringere Anforderungen zu stellen, denn sowohl die Zahl als auch die Geschwindigkeit der in diesem Bereich des Arbeitsraumes gelangenden Späne ist deutlich geringer als es im Bereich der Aufspannfläche der Fall ist.

Die neue Konstruktion mit dem hochgelegten x-Schlitten, auf dem selbstverständlich dann auch der y-Schlitten sitzt, erlaubt also den Einsatz von deutlich leichteren und einfacheren längenveränderlichen Abdeckungen, z.B. von Rolloabdeckungen. Diese Maßnahme reduziert nicht nur die Kosten der neuen Werkzeugmaschine, sie ermöglicht wegen des verglichen mit dem Stand der Technik sehr viel geringeren Gewichtes auch ein schnelleres Verfahren des Spindelkopfes.

In einer Weiterbildung ist es dann bevorzugt, wenn zu beiden Seiten des ersten Schlittens je eine bis zum oberen Ende des Arbeitsraumes reichende Wange angeordnet ist, an der jeweils die zugeordnete Rolloabdeckung mit ihrem freien Ende befestigt ist, wobei die Rolloabdeckung sich jeweils auf eine jeweils an einer äußeren Seite des Arbeitsraumes angeordnete Rolle aufwickelt.

Bei dieser Maßnahme ist von Vorteil, daß die Rolle selbst ortsfest sein kann, so daß lediglich die Rollobahn selbst verfahren wird. Dies trägt dazu bei, daß die beim Verfahren des Spindelkopfes zu bewegende Masse noch einmal reduziert wird.

Weiter ist es bevorzugt, wenn im Bereich des Werkstücktisches eine Spänerutsche vorgesehen ist, die vorzugsweise durch die Öffnung in der Innenverkleidung die anfallenden Späne abführt.

Hier ist von Vorteil, daß sozusagen durch dieselbe Öffnung sowohl die verschmutzte Luft als auch die anfallenden Späne abgeführt werden, was einen extrem einfachen Aufbau der Innenverkleidung ermöglicht.

Dabei ist es dann weiter bevorzugt, wenn die Absaugvorrichtung eine Labyrinthdichtung aufweist, durch die die verschmutzte Luft angesaugt wird.

Hier ist von Vorteil, daß durch die Labyrinthdichtung die ebenfalls in die Öffnung hinein beförderten Späne zurückgehalten werden, so daß sie nicht in die Absaugvorrichtung gelangen. Dadurch wird eine Beschädigung des Gebläses sowie der Filter/Ölabscheider vermieden. Diese Vorteile waren insofern überraschend, als erst bei der Konstruktion der neuen Werkzeugmaschine erkannt wurde, daß tatsächlich sowohl die verschmutzte Luft als auch die Späne durch dieselbe Öffnung aus dem Arbeitsraum abgeführt werden können, wobei eine einfache Labyrinthdichtung ausreicht, um eine Beschädigung der Absaugvorrichtung durch die Späne zu verhindern. Bisher war nämlich immer davon ausgegangen worden, daß die Absaugvorrichtung nach oben arbeiten muß, während die Späne nach unten abgeführt werden.

Weitere Vorteile ergeben sich aus der Beschreibung und der beigefügten Zeichnung.

Ein Ausführungsbeispiel der Erfindung ist in der beigefügten Zeichnung dargestellt und wird in der nachfolgenden Beschreibung näher erläutert. Es zeigen:
- Fig. 1: eine schematische Seitenansicht der neuen Werkzeugmaschine; und
- Fig. 2: eine Draufsicht auf den Arbeitsraum der Werkzeugmaschine aus Fig. 1.

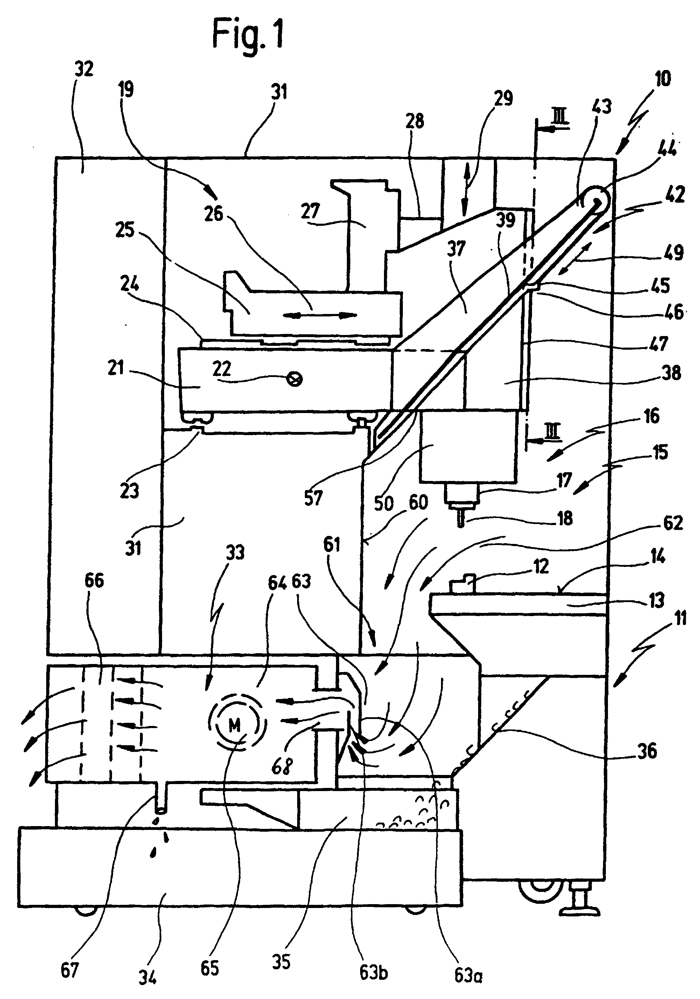

In Fig. 1 ist mit 10 eine Werkzeugmaschine bezeichnet, die einen Maschinenfuß 11 aufweist. Die Werkzeugmaschine 10 dient zum Bearbeiten von Werkstücken 12, die auf einem auf dem Maschinenfuß 11 angeordneten Werkstückstisch 13, der zu diesem Zweck eine Aufspannfläche 14 aufweist, aufgespannt werden.

Die Bearbeitung der Werkstücke 12 erfolgt in einem Arbeitsraum 15, in dem ein Spindelkopf 16 in drei Koordinatenrichtungen verfahrbar ist. Der Spindelkopf 16 weist eine Spindel 17 auf, die ein schematisch angedeutetes Werkzeug 18 trägt, mit dem das Werkstück 12 bearbeitet wird.

Zum Verfahren des Spindelkopfes 16 ist eine auf dem Maschinenfuß 11 angeordnete Verschiebemechanik 19 vorgesehen, die vollständig außerhalb des Arbeitsraumes 15 angeordnet ist.

Die Verschiebemechanik 19 umfaßt einen ersten Schlitten 21, der in Richtung einer bei 22 angedeuteten x-Koordinate auf Führungen 23 verschiebbar ist, die hinter dem Arbeitsraum 15 und deutlich oberhalb der Aufspannfläche 14 angeordnet sind. Die Führungen 23 liegen soweit oberhalb des üblichen Arbeitsraumes 15, daß die Spindel 17 mit dem Werkzeug 18 sozusagen vor und unterhalb des ersten Schlittens 21 arbeitet.

Auf dem ersten Schlitten 21 sind Führungen 24 für einen zweiten Schlitten 25 vorgesehen, der längs einer bei 26 angedeuteten y-Koordinate quer zu der x-Koordinate 22 verfahrbar ist.

Auf dem zweiten Schlitten 25 ist ein Ständer 27 angeordnet, an dem ein dritter Schlitten 28 in Richtung einer bei 29 angedeuteten z-Koordinate verschiebbar ist. An dem dritten Schlitten 28 ist der Spindelkopf 16 befestigt.

Über die Verschiebemechanik 19 kann der Spindelkopf 16 folglich in den drei zueinander orthogonalen Koordinaten x, y und z im Arbeitsraum 15 verfahren werden.

Die Werkzeugmaschine 10 weist eine schematisch bei 31 angedeutete Verkleidung auf, die die Werkzeugmaschine nach außen abschließt, so daß im Arbeitsraum 15 herumfliegende Späne bzw. die dort vorhandene, mit Kühlmittel verschmutzte Luft nicht nach außen treten können.

Hinter der Verkleidung 31, also in Fig. 1 links, ist ein Schaltschrank 32 vorgesehen, über den die elektrische Verteilung erfolgt. Unterhalb des Schaltschrankes 32 sowie der Verschiebemechanik 19, also im Maschinenfuß 11 ist eine Absaugvorrichtung 33 vorgesehen, durch die die verschmutzte Luft aus dem Arbeitsraum 15 in noch näher zu beschreibender Weise abgesaugt wird. Unterhalb der Absaugvorrichtung 33 befindet sich eine Kühlmittelwand 34, die in der Absaugvorrichtung 33 abgeschiedenes Kühlmittel aufnimmt.

Ferner ist noch eine Spänewanne 35 zu erkennen, der über eine Spänerutsche 36 Späne aus dem Arbeitsraum 15 zugeführt werden.

Auf die Abdichtung des Arbeitsraumes 15 nach unten ist bei der Werkzeugmaschine 10 gemäß Fig. 1 kein besonderer Wert zu legen, weil sich sämtliche beweglichen Teile und Führungen oberhalb der Aufspannfläche 14 befinden, so daß sie durch herumfliegende Späne etc. nicht beschädigt oder auf störende Weise verschmutzt werden können.

Im oberen Bereich des Arbeitsraumes 15 sind dagegen längenveränderliche Abdeckungen angeordnet, über die das "Eintauchen" des Spindelkopfes 16 in den Arbeitsraum 15 sowie das Verfahren in den drei orthogonalen Koordinatenrichtungen x, y und z ermöglicht wird.

Zu diesem Zweck sind an dem ersten Schlitten 21 zwei Wangen angeordnet, von denen in Fig. 1 lediglich eine linke Wange 37 zu sehen ist. Die Wange 37 ist ein Blechseitenteil, das sich in Fig. 1 von dem Schlitten 21 ausgehend schräg nach rechts oben erstreckt.

Zwischen den Wangen ist ein aus Blech gefertigter Kasten 38 angeordnet, der an dem zweiten Schlitten 25 befestigt ist und dessen Bewegung in Richtung der y-Koordinate 26 folgt.

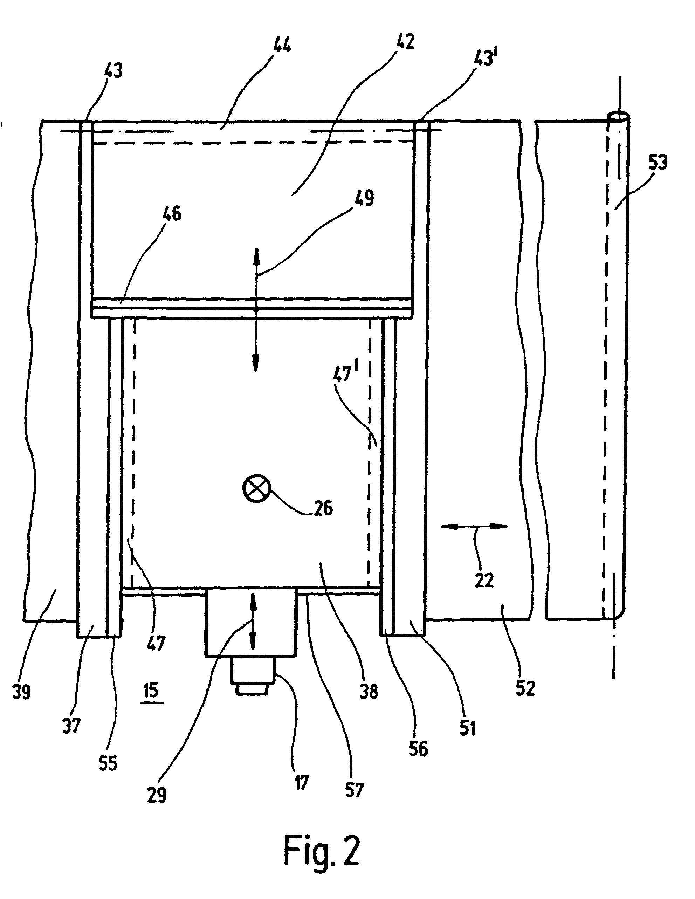

An der Wange 37 ist eine seitliche Rolloabdeckung 39 vorgesehen, von der in Fig. 1 lediglich der Befestigungsbereich an der Wange 37 zu sehen ist. An der anderen Wange ist eine entsprechende Rolloabdeckung vorgesehen, die in Fig. 2 zu sehen ist.

Zwischen den seitlichen Rolloabdeckungen ist noch eine obere Rolloabdeckung 42 vorgesehen, die an dem oberen Ende 43 der Wange 37 eine Rolle 44 aufweist. Die obere Rolloabdeckung 42 ist mit ihrem unteren freien Ende 45 an einer Abstreiferschiene 46 befestigt, die über eine senkrechte Nut 47 in noch zu beschreibender Weise an dem Kasten 38 gelagert ist. Die Abstreiferschiene 46 ist ferner auch an der Wange 37 gelagert, so daß sie sich beim Verfahren des Kastens 38 gegenüber der Wange 37 einerseits am Kasten 38 nach oben bzw. nach unten sowie andererseits längs der Wange 37 bewegt. Die obere Rolloabdeckung 42 wird dabei längs eines Pfeiles 49 ausgefahren bzw. eingefahren, wobei sich ihre Neigung jedoch nicht ändert.

Aus dem Kasten 38 fährt nach unten ein Rohr 50 aus, das die Spindel 17 sowie in Fig. 1 nicht gezeigte Werkzeugwechsler schützt, die um die Spindel 17 herum angeordnet sind.

In Fig. 2 ist in einer Draufsicht in Fig. 1 von rechts auf den Arbeitsraum 15 der Werkzeugmaschine 10 die Anordnung der einzelnen Rolloabdeckungen besser zu erkennen.

In Fig. 2 ist zunächst zu sehen, daß auf der rechten Seite des Kastens 38 eine weitere Wange 51 angeordnet ist, an der eine weitere seitliche Rolloabdeckung 52 befestigt ist, die auf eine bei 53 angedeutete Rolle aufwickelbar bzw. von dieser abwickelbar ist.

Aus Gründen der Übersichtlichkeit ist die für linke seitliche Rolloabdeckung 39 vorgesehene Rolle in Fig. 2 nicht gezeigt.

Fig. 2 ergibt ferner, daß die Rolle 44 der oberen Rolloabdeckung 42 zwischen den beiden oberen Enden 43, 43' der Wangen 37 und 51 drehbar gelagert ist. Die Breite der Rolloabdeckung 42 ist dabei so gewählt, daß sie nicht nur den Kasten 38 sondern auch noch zumindest teilweise die Wangen 37, 51 mit überdeckt, an denen sie auch quasi anliegt.

Zwischen den Wangen 37 bzw. 51 sowie dem Kasten 38 sind ferner noch Abstreiferschienen 55, 56 vorgesehen, die in dem nicht durch die Rolloabdeckung 42 geschützten Bereich für eine gute Abdichtung zwischen den Wangen 37, 51 sowie dem Kasten 38 sorgen.

Im Vergleich zwischen den Fig. 1 und 2 ergibt sich, daß der Kasten 38 zwischen den beiden Wangen 37, 51 hin- und herfährt, wobei die obere Lücke zwischen dem Kasten 38 einerseits sowie den beiden Wangen 37, 51 andererseits durch die obere Rolloabdeckung 42 geschlossen wird. Beidseits der Wangen 37, 51 sorgen die seitlichen Rolloabdeckungen 39 bzw. 52 für eine Abdichtung des Arbeitsraumes 15 nach schräg links oben in Fig. 1.

Zwischen den beiden Wangen 37 und 51 gibt es im unteren Bereich eine weitere Lücke, die von einem Blech 57 verschlossen ist, das den Kasten 38 nach unten abschließt und sich nach hinten unter den ersten Schlitten 21 erstreckt. In diesem Abdeckblech 57 ist eine Öffnung vorgesehen, die gerade so groß ist, daß das Rohr 50 ein- und ausgefahren werden kann.

Zur weiteren Abdichtung des Arbeitsraumes 15 gegenüber der Maschinenmechanik ist im unteren Bereich eine Innenverkleidung vorgesehen, von der in Fig. 1 lediglich eine Rückwand 60 gezeigt ist. In dieser Innenverkleidung ist eine nach unten weisende Öffnung 61 vorgesehen, die zwischen der Rückwand 60 und dem Werkstücktisch 13 angeordnet ist. Durch diese Öffnung 61 gelangen jetzt Späne über die Spänerutsche 36 in die Spänewanne 35. Andererseits wird durch die Öffnung 61 bei 62 angedeutete verschmutzte Luft aus dem Arbeitsraum 15 angesogen, die dann auf die Absaugvorrichtung 33 trifft, die in einer Ebene parallel zur Aufspannfläche 14 arbeitet, die angesaugte Luft also durch eine Zweite Öffnung 68 im wesentlichen nach hinten oder zur Seite weiterbefordert.

Die verschmutzte Luft trifft bei dieser Ansaugung zunächst auf eine Labyrinthdichtung 63, die ein von oben übergreifendes Blech 63a sowie ein von unten nach oben weisendes Ablenkblech 63b aufweist. Durch diese Labyrinthdichtung 63 wird verhindert, daß durch die Öffnung 61 fallende Späne in die Absaugvorrichtung 33 hineingelangen.

Die Absaugvorrichtung 33 selbst ist in einem Raum 64 im Maschinenfuß 11 angeordnet und umfaßt ein Absauggerät 65 sowie Luftfilter 66, die die mit Kühlmittel etc. verschmutzte Luft filtern. Das dabei abgeschiedene Kühlmittel wird durch eine bei 67 angedeutete, kurze Rückflußleitung in die Kühlmittelwanne 34 zurückgeführt.

## Patentansprüche

1. Werkzeugmaschine mit einem Maschinenfuß (11), einem auf dem Maschinenfuß (11) angeordneten Werkstücktisch (13), der eine Aufspannfläche (14) für zu bearbeitende Werkstücke (12) aufweist, einer auf den Maschinenfuß (11) angeordneten Verschiebemechanik (19) für einen Spindelkopf (16), der mit einer Werkzeuge (18) zur Bearbeitung der Werkstücke (12) aufnehmenden Spindel (17) versehen und in einem Arbeitsraum (15) oberhalb des Werkstücktisches (13) verfahrbar ist, und einer Verkleidung (31), die zumindest den Arbeitsraum (15) nach außen abschließt, wobei eine Absaugvorrichtung (33) vorgesehen ist, die aus dem Arbeitsraum (15) verschmutzte Luft (62) absaugt,
**dadurch gekennzeichnet, daß** die Absaugvorrichtung (33) die verschmutzte Luft (62) durch den Maschinenfuß (11) absaugt, vorzugsweise selbst im Maschinenfuß (11) angeordnet ist, wobei im Bereich des Werkstücktisches (13) eine Innenverkleidung für den Arbeitsraum (15) angeordnet ist, in der eine nach unten weisende Öffnung (61) vorgesehen ist, durch die die Absaugvorrichtung (33) verschmutzte Luft (62) absaugt, wobei die Absaugvorrichtung (33) unterhalb der ersten Öffnung (61) eine zweite Öffnung (68) aufweist, durch die die Absaugvorrichtung (33) in einer Ebene etwa parallel zur Aufspannfläche (14) arbeitet, und wobei unterhalb der zweiten Öffnung (68) eine Spänewanne (35) angeordnet ist.

2. Werkzeugmaschine nach Anspruch 1, **dadurch gekennzeichnet, daß** die Verschiebemechanik (19) oberhalb der Aufspannfläche (14), vorzugsweise oberhalb des Arbeitsraumes (15) angeordnet ist.

3. Werkzeugmaschine nach Anspruch 2, **dadurch gekennzeichnet, daß** in der Verschiebemechanik (19) drei orthogonal zueinander bewegbare Schlitten (21, 25, 28) vorgesehen sind, von denen der zweite Schlitten (25) verfahrbar an dem ersten (21) und der dritte Schlitten (28) verfahrbar an dem zweiten Schlitten (25) gelagert ist, wobei der Spindelkopf (16) mit dem dritten Schlitten (28) verbunden ist und der erste Schlitten (21) hinter dem Arbeitsraum (15) und oberhalb der Aufspannfläche (14), vorzugsweise oberhalb des Arbeitsraumes (15) angeordnet ist.

4. Werkzeugmaschine nach Anspruch 3, **dadurch gekennzeichnet, daß** an dem ersten Schlitten (21) zu beiden Seiten je eine Rolloabdeckung (39, 52) angeordnet ist, die sich beim Verfahren des ersten Schlittens (21) auf- bzw. abwickelt und mit ihrer Rollofläche den Arbeitsraum (15) abdeckt.

5. Werkzeugmaschine nach Anspruch 4, **dadurch gekennzeichnet, daß** zu beiden Seiten des ersten Schlittens (21) je eine bis zum oberen Ende des Arbeitsraumes (15) reichende Wange (37, 51) angeordnet ist, an der jeweils die zugeordnete Rolloabdeckung (39, 52) mit ihrem freien Ende befestigt ist, wobei die Rolloabdeckung (39, 52) sich jeweils auf eine jeweils an einer äußeren Seite des Arbeitsraumes (15) angeordnete Rolle (53) aufwickelt.

6. Werkzeugmaschine nach einem der Ansprüche 1 bis 5, **dadurch gekennzeichnet, daß** im Bereich des Werkstücktisches (13) eine Spänerutsche (36) vorgesehen ist, die vorzugsweise durch die erste Öffnung (61) in der Innenverkleidung die anfallenden Späne abführt.

7. Werkzeugmaschine nach einem der Ansprüche 1 bis 6, **dadurch gekennzeichnet, daß** die Absaugvorrichtung (33) eine Labyrinthdichtung (63; 63a, 63b) aufweist, durch die verschmutzte Luft (62) angesaugt wird.

## Claims

1. A machine tool having a machine base (11), a workpiece table (13) arranged on the machine base (11), said workpiece table (13) comprising a clamping surface (14) for workpieces (12) to be machined, a shifting mechanism (19) arranged on the machine base (11) for a spindle head (16), which spindle head is equipped with a spindle (17) receiving tools (18) for machining the workpieces (12) and which can be displaced in a working space (15) above the working table (13), and having an enclosure (31), which closes off at least the working space (15) against the outside, wherein an extraction mechanism (33) is provided which extracts contaminated air (62) from the working space (15),
**characterized in that** the extraction mechanism (33) extracts the contaminated air (62) through the machine base (11), and preferably it is itself located in the machine base (11), wherein an inner linning for the working space (15) is arranged in the region of the workpiece table (13), said inner linning being provided with a downward-facing opening (61) through which the extraction mechanism (33) extracts contaminated air (62), wherein the extraction mechanism (33) comprises a second opening (68) located underneath the first opening (61) through which second opening the extraction mechanism (33) operates in a plane approximately parallel to the clamping surface (14), and wherein a chip tank (35) is arranged underneath of the second opening (68).

2. The machine tool of claim 1, **characterized in that** the shifting mechanism (19) is arranged above the clamping surface (14), preferably above the working space (15).

3. The machine tool of claim 2, **characterized in that** three carriages (21, 25, 28) orthogonally movable to one another are provided in the shifting mechanism (19), the second carriage (25) being mounted displaceably on the first (21), and the third carriage (25) being displaceably mounted on the second carriage (25), wherein the spindle head (16) is joined to the third carriage (28), and wherein the first carriage (21) is arranged behind the working space (15) and above the clamping surface (14), preferably above the working space (15).

4. The machine tool of claim 3, **characterized in that** each a roller-shade cover (39, 52) is arranged on the first carriage (21) on both sides, which cover winds up and unwinds and covers the working space (15) with its roller surface upon displacement of the first carriage (21).

5. The machine tool of claim 4, **characterized in that** there is arranged on either side of the first carriage (21) a cheekpiece (37, 51) extending to the upper end of the working space (15), to which cheekpiece the respective associated roller-shade cover (39, 52) is attached with its free end, wherein the roller-shade cover (39, 52) winds up in each case on a respective roller (53) arranged on an outer side of the working space (15).

6. The machine tool of any of claims 1 to 5, **characterized in that** there is provided a chip chute (36) in the region of the workpiece table (13), which chute preferably carries off the machining chips through the first opening (61) in the inner linning.

7. The machine tool of any of claims 1 to 6, **characterized in that** the extraction mechanism (33) comprises a labyrinth seal (63; 63a, 63b) through which contaminated air is drawn in.

## Revendications

1. Machine-outil comportant un pied de machine (11), une table porte-pièces (13) disposée sur le pied de machine (11) et qui comporte une surface de bridage (14) pour des pièces (12) à usiner, un mécanisme de coulissement (19), disposé sur le pied de machine (11), pour une tête de broche (16) qui est pourvue d'une broche (17) recevant des outils (18) pour usiner les pièces (12), et qui est déplaçable dans un espace de travail (15) au-dessus de la table porte-pièces (13), et avec un habillage (31) qui ferme au moins l'espace de travail (15) vers l'extérieur, un dispositif d'aspiration (33) étant prévu qui aspire l'air (62) pollué de l'espace de travail (15),
**caractérisée en ce que** le dispositif d'aspiration (33) aspire l'air (62) pollué à travers le pied de machine (11), est disposé de préférence lui-même dans le pied de machine (11), un habillage intérieur pour l'espace de travail (15) étant disposé dans la zone de la table porte-pièces (13), dans lequel est prévue une ouverture (61) dirigée vers le bas à travers laquelle le dispositif d'aspiration (33) aspire l'air (62) pollué, le dispositif d'aspiration (33) comportant, au-dessous de la première ouverture (61), une deuxième ouverture (68) à travers laquelle le dispositif d'aspiration (33) fonctionne dans un plan sensiblement parallèle à la surface de bridage (14), et un bac à copeaux (35) étant disposé au-dessous de la deuxième ouverture (68).

2. Machine-outil selon la revendication 1, **caractérisée en ce que** le mécanisme de coulissement (19) est disposé au-dessus de la surface de bridage (14), de préférence au-dessus de l'espace de travail (15).

3. Machine-outil selon la revendication 2, **caractérisée en ce que** dans le mécanisme de coulissement (19) sont prévus trois chariots (21, 25, 28) déplaçables orthogonalement les uns aux autres, dont le deuxième chariot (25) est monté déplaçable sur le premier chariot (21) et le troisième chariot (28) est monté déplaçable sur le deuxième chariot (25), la tête de broche (16) étant reliée au troisième chariot (28) et le premier chariot (21) étant disposé derrière l'espace de travail (15) et au-dessus de la surface de bridage (14), de préférence au-dessus de l'espace de travail (15).

4. Machine-outil selon la revendication 3, **caractérisée en ce que** sur le premier chariot (21) est disposé sur chacun des deux côtés un capot à enroulement (39, 52) qui s'enroule et se déroule pendant le déplacement du premier chariot (21) et recouvre l'espace de travail (15) par sa surface de store à enroulement.

5. Machine-outil selon la revendication 4, **caractérisée en ce que** sur chacun des deux côtés du premier chariot (21) est disposée une joue (37, 51) s'étendant jusqu'à l'extrémité supérieure de l'espace de travail (15), à laquelle le capot à enroulement (39, 52) associé est fixé par son extrémité libre, le capot à enroulement (39, 52) s'enroulant sur un rouleau (53) disposé sur un côté extérieur de l'espace de travail (15).

6. Machine-outil selon l'une des revendications 1 à 5, **caractérisée en ce que** dans la zone de la table porte-pièces (13) est prévue une glissière à copeaux (36) qui évacue les copeaux se formant, de préférence à travers la première ouverture (61) de l'habillage intérieur.

7. Machine-outil selon l'une des revendications 1 à 6, **caractérisée en ce que** le dispositif d'aspiration (33) comporte une étanchéité à labyrinthe (63 ; 63a, 63b) à travers laquelle est aspiré l'air (62) pollué.
